# EUROPÄISCHE PATENTANMELDUNG

(11) **EP 0 895 948 A1**
(43) Veröffentlichungstag der Anmeldung: **10.02.1999**
(21) Anmeldenummer: 98112817.6
(22) Anmeldetag: 10.07.1998
(51) Int. Cl.: B65G 15/62

(54) **Förderstrecke**

(30) Priorität: 08.08.1997 DE 19734314
(71) Anmelder: ROBERT BOSCH GMBH, 70442 Stuttgart (DE)
(72) Erfinder: Ciccorilli, Claudio, 71732 Tamm (DE)

(57) **Zusammenfassung**

Es wird eine Förderstrecke (10), insbesondere für Werkstückträger (60), vorgeschlagen. Die Förderstrecke (10) weist einen Fördergurt (46), und eine Fördergurtführung (35) auf. Zwischen der Fordergurtführung (35) und dem Fördergurt (46) ist zumindest in Teilbereichen der Förderstrecke (10) eine Schicht (40, 40a) aufgebracht, wobei der Reibungskoeffizient (µ₂, µ₃) zwischen dem Fördergurt (46) und der Schicht (40, 40a) niedriger ist als der Reibungskoeffizient (µ₁, µ₄) zwischen dem Fördergurt (46) und der Fördergurtführung (35). Darüber hinaus ist die Schicht (40, 40a) an die jeweiligen Umgebungsbedingungen der Teilbereiche der Förderstrecke (10) angepaßt.

## Beschreibung

### Stand der Technik

Die Erfindung bezieht sich auf eine Förderstrecke, insbesondere für Werkstuckträger, nach der Gattung des Hauptanspruchs. Aus der DE 32 31 868 C2 und der DE 35 18 134 A1 ist eine Förderstrecke mit einem Führungsprofil bekannt, das aus einem Kunststoff mit guten Gleiteigenschaften besteht. Zur weiteren Verminderung der Reibung ist in der DE 35 18 134 A1 darüber hinaus vorgesehen, das Führungsprofil mit einem Raster von Vertiefungen (Waffelungen) zu versehen. Durch die Vertiefungen des Rasters soll sich im Betrieb ein Luftpolster bilden, das die Reibung zwischen Fördergurt und Führungsprofil vermindert. In der Praxis hat sich jedoch gezeigt, daß dieser Effekt vernachlässigbar gering ist. Vielmehr wird durch die Vertiefungen die Auflagefläche zwischen Fördergurt und Führungsprofil vermindert. Dadurch wird, bei gleichbleibender Auflagekraft der Werkstückträger, die Flächenpressung erhöht, was eine Zunahme des Verschleißes zur Folge hat. Außerdem wird ein Führungsprofil üblicherweise extrudiert. Um danach die Vertiefungen herzustellen, ist ein zusätzlicher Arbeitsgang notwendig.

Aus den Produktinformationen 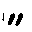 Scotch™, Teflon™ -beschichtetes Glasgewebeband, Dezember 1986" und 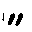 Scotch™, Gleitband selbstklebend, Februar 1988" der Firma 3M gehen Gleitbänder hervor, die zum Beschichten von Oberflächen eingesetzt werden. Sie haben hohe Gleiteigenschaften und eine gute thermische, mechanische und chemische Beständigkeit. Die Gleitbänder werden üblicherweise verwendet in Münzrutschen und Packungsschächten. Der Schwerpunkt liegt auf dem schonenden Fördern von Fördergut.

### Vorteile der Erfindung

Die erfindungsgemäße Förderstrecke mit den kennzeichnenden Merkmalen des Hauptanspruchs hat gegenüber den bekannten Förderstrecken den Vorteil, daß die Reibung zwischen der Fördergurtführung und dem Fördergurt in größerem Maße vermindert wird.

Durch die jeweilige Gleiteigenschaft und thermische, mechanische und chemische Beständigkeit der verschiedenen Gleitbänder können die Eigenschaften einer Fördergurtführung in jedem Teilbereich einer Förderstrecke optimiert werden.

Ein selbstklebendes Gleitband oder ein Lack ist auf einfache Weise und nachträglich auf eine Fördergurtführung auftragbar. Somit kann die Reibung in einem Teilbereich einer Förderstrecke auch nach der Montage beeinflußt werden. Insbesondere ein selbstklebendes Gleitband hat noch den Vorteil, daß es leicht wieder entfernt werden kann.

Weitere Vorteile und vorteilhafte Weiterbildungen der erfindungsgemäßen Förderstrecke ergeben sich aus den Unteransprüchen und der Beschreibung.

### Zeichnung

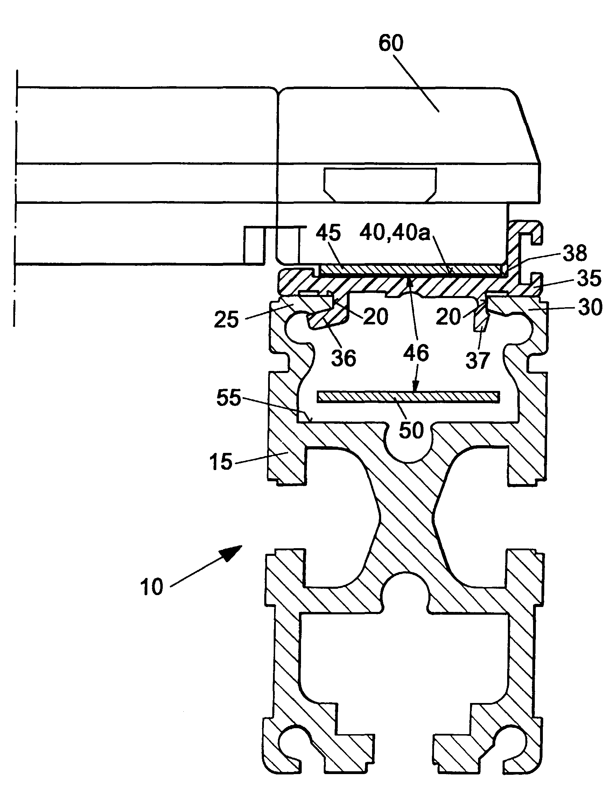

Ein Ausführungsbeipiel der Erfindung ist in der Zeichnung dargestellt und in der nachfolgenden Beschreibung näher erläutert. In der einzigen Figur ist ein Querschnitt der einen Förderstrecke eines Doppelgurtförderers für Werkstückträger der industriellen Fertigung gezeigt.

### Beschreibung

Die in der Figur dargestellte Förderstrecke 10 eines Doppelgurtförderers weist ein im Aluminium-Strangpreßverfahren hergestelltes Tragprofil 15 auf, welches wie bekannt ein kastenförmiges Umrißprofil hat. Die obere Kastenwand ist mit einer durchgehenden Längsöffnung 20 versehen, die von zwei seitlichen Wandabschnitten 25, 30 begrenzt ist. Diese dienen als Tragflansche für ein aufgesetztes Führungsprofil 35, das aus extrudiertem Polyamid besteht. Das Führungsprofil 35 weist an der Unterseite zwei hakenförmige Fortsätze 36 bzw. 37 auf, die die seitlichen Wandabschnitte 25 bzw. 30 hintergreifen, wodurch das Führungsprofil 35 in das Tragprofil 15 spielfrei einrastbar ist. Das Führungsprofil 35 weist eine flache, breite Nut 38 auf. In diese Nut 38 ist ein Gleitband 40 geklebt, auf welchem der eine Strang 45 eines endlosen Fördergurts 46 liegt. Durch die Seitenwandungen der Nut 38 ist der Strang 45 seitlich geführt. Der andere Strang 50 des Fördergurts 46 durchsetzt eine untere Kammer 55 des Tragprofils 15, in welche die Längsöffnung 20 einmündet. Auf dem Fördergurt 46 liegen angedeutete Werkstückträger 60 auf, welche durch Reibschluß auf dem Fördergurt 46 mitbewegt werden.

Das Gleitband 40 kann über die gesamte Länge der Förderstrecke 10 aufgebracht werden oder nur in kritischen Teilbereichen. Die kritischen Teilbereiche sind Bereiche, in denen häufig Werkstückträgerstaus auftreten, zum Beispiel vor Bearbeitungstationen. Die Verwendung des Gleitbandes in unkritischen Teilbereichen, in denen beispielsweise keine Werkstückträgerstaus auftreten, ist allerdings auch sinnvoll, um die Reibung über die gesamte Länge der Förderstrecke zu minimieren. Je nach Umgebungsbedingung kann ein Gleitband 40 vorgesehen werden, das an diese Umgebungsbedingungen angepaßte Eigenschaften aufweist. In Nassbereichen kann beispielsweise ein lösungsmittelbeständiges Gleitband 40 aufgeklebt werden. An und nach einer Trockenstation kann ein Gleitband 40 mit hoher thermischer Resistenz verwendet werden. Natürlich kann auch ein Gleitband 40, in welchem gute thermische, mechanische und chemische Beständigkeit verbunden sind, verwendet werden. Wichtig ist, daß das Gleitband 40 in Abhängigkeit von den Umgebungsbedingungen gut haftet. Als besonders geeignet erweisen sich 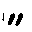 Scotch™, Teflon™-beschichtetes Glasgewebeband" und 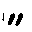 Scotch™, Gleitband selbstklebend" der Firma 3M. Durch Versuche können aber auch andere geeignete Gleitbänder 40 ermittelt werden.

Der Fördergurt 46 wird üblicherweise auch an der dem Führungsprofil 35 zugewandten Seite angetrieben. Dies erfolgt zum Beispiel durch ein Reibrad. Durch die Aufbringung des Gleitbandes 40 auf das Führungsprofil 35 bleibt der Reibungskoeffizient zwischen Fördergurt 46 und Reibrad unbeeinflußt. Dieser Reibungskoeffizient ist relativ hoch, was notwendig ist, um keine hohen Verluste bei der Übertragung der Kraft vom Reibrad auf den Fördergurt 46 zu haben.

Das Führungsprofil 35 ist, wie bereits erwähnt, üblicherweise aus extrudiertem Polyamid, wobei auch im Aluminium-Strangpreßverfahren hergestellte Führungsprofile 35 oder Führungsprofile 35 aus Polyvinylchlorid (PVC) verwendbar sind. Der Fördergurt 46 besteht oftmals auch aus Polyamid. Der Reibungskoeffizient µ₁ zwischen zwei Teilen aus Polyamid beträgt bei Gleitreibung in etwa 0,4. Bei der Verwendung von selbstklebenden Gleitbändern 40 mit einer Beschichtung aus Polyethylen beträgt der Reibungskoeffizient µ₂ zwischen Polyamid und Polyethylen bei Gleitreibung ungefähr 0,3. Wird ein Teflon™-beschichtetes Glasgewebeband verwendet, so beträgt der Reibungskoeffizient µ₃ zwischen Polyamid und Teflon™ bei Gleitreibung weniger als 0,3. Durch Versuche lassen sich jedoch auch andere geeignete Paarungen ermitteln.

Das in der Figur dargestellte Tragprofil 15 weist eine Längsöffnung 20 auf, in die das Führungsprofil 35 eingerastet ist. Diese Ausbildung des Tragprofils 15 ist in der Praxis üblich. Dadurch kann das Tragprofil 15 statt mit einem Führungsprofil 35 und einem Fördergurt 46 auch mit Rollenelementen ausgerüstet werden. Somit können Rollenstrecken für den manuellen Transport von Werkstückträgern 60 geschaffen werden.

Das Führungsprofil 35 entfällt, wenn das Tragprofil 15 ohne Längsöffnung 20 ausgebildet wird und statt dessen in der dadurch entstandenen Oberfläche der Außenseite eine flache und breite Nut ähnlich der Nut 38 des Führungsprofils 35 ausgebildet wird. In diesem Fall liegt der Fördergurt 46 direkt auf dem Tragprofil auf. Die hohe Reibung zwischen dem Polyamid des Fördergurts 35 und dem Aluminium des Tragprofils (Reibungskoeffizient µ₄ von bis zu 0,5) kann jedoch durch die Verwendung des Gleitbandes 40 verbessert werden.

Statt eines Gleitbandes 40 kann auch eine Schicht 40a beispielsweise in Form eines Lacks oder dergleichen aufgebracht werden, der wie das Gleitband 40 gut haftet. Voraussetzung ist, daß der entstehende Reibungskoeffizient entsprechend niedrig ist und diese Schicht den Umgebungsbedingungen angepaßt ist. Insbesondere Lacke für die Elektronen-Strahl-Härtung (ESH) eignen sich. Hierzu werden diese Lacke aufgetragen und mit einem Elektronenstrahl gehärtet, wodurch sie eine besonders harte und verschleißarme Oberfläche aufweisen.

Wenn der Fördergurt 46 von der Seite angetrieben wird, die dem Führungsprofil 35 abgewandt ist oder nach einem anderen Prinzip, so kann eine die Reibung vermindernde Schicht auch auf den Fördergurt 46 selbst aufgebracht werden. Bei einem entsprechenden Antrieb können sogar auf den Fördergurt 46 und auf das Führungsprofil 35 reibungsvermindernde Schichten aufgebracht werden. Dies ist zum Beispiel bei einem Fördergurt möglich, der auf seiner dem Führungsprofil zugewandten Seite als Zahnriemen ausgebildet ist. Diese als Zahnriemen ausgebildete Seite könnte dann, zumindest an den Spitzen der Zähne, mit einer oben beschriebenen Lackschicht versehen werden. Für den Antrieb hätte dies keine Relevanz, da kein Reibrad verwendet wird sondern ein Rad mit einer zum Zahnriemen passenden Verzahnung. Die Kraftübertragung erfolgt insofern nicht durch einen Reibschluß sondern durch Formschluß. Wird das Führungsprofil 35 dann noch beispielsweise mit einem Gleitband 40 versehen, so ist die Reibung minimiert.

## Patentansprüche

1. Förderstrecke (10), insbesondere für Werkstückträger (60), bestehend aus mindestens einem Fördergurt (46), und mindestens einer Fördergurtführung (35), dadurch gekennzeichnet, daß sich zwischen dem Fördergurt (46) und der Fördergurtführung (35) zumindest in Teilbereichen der Förderstrecke (10) mindestens eine Schicht (40, 40a) befindet, wobei die Schicht (40, 40a) mit mindestens einer Seite haftet, und daß der Reibungskoeffizient (µ₂, µ₃) zwischen dem Fördergurt (46) oder der Fördergurtführung (35) und mindestens einer anderen Seite der Schicht (40, 40a) niedriger ist als der Reibungskoeffizient (µ₁, µ₄) zwischen dem Fördergurt (46) und der Fördergurtführung (35).

2. Förderstrecke nach Anspruch 1, dadurch gekennzeichnet, daß die Teilbereiche der Förderstrecke (10) unterschiedliche Reibungskoeffizienten (µ₁, µ₂, µ₃, µ₄) aufweisen.

3. Förderstrecke nach Anspruch 1 oder 2, dadurch gekennzeichnet, daß die Schicht ein an der Fördergurtführung (35) haftendes Gleitband (40) ist.

4. Förderstrecke nach Anspruch 3, dadurch gekennzeichnet, daß das Gleitband (40) ein Teflon™ -beschichtetes Glasgewebe-Klebeband ist.

5. Förderstrecke nach Anspruch 3, dadurch gekennzeichnet, daß das Gleitband (40) ein selbstklebendes Klebeband ist.

6. Förderstrecke nach Anspruch 1 oder 2, dadurch gekennzeichnet, daß die Schicht (40a) ein Lack ist.

7. Förderstrecke nach einem der Ansprüche 1 bis 6, dadurch gekennzeichnet, daß die Schicht (40, 40a) am Fördergurt (46) haftet.

8. Förderstrecke nach einem der Ansprüche 1 bis 7, dadurch gekennzeichnet, daß die Schicht (40a) am Fördergurt (46) und die Schicht (40) an der Fördergurtführung (35) haftet.
